# EUROPÄISCHE PATENTSCHRIFT

(11) **EP 1 518 633 B1**
(45) Veröffentlichungstag und Bekanntmachung des Hinweises auf die Patenterteilung: **23.04.2008**
(21) Anmeldenummer: 04022609.4
(22) Anmeldetag: 22.09.2004
(51) Int. Cl.: B23K 26/24, B23K 15/00

(54) **Schweissverfahren und zusammengesetzter Körper**
Welding process and assembled bodies
Procédé de soudage et article assemblé

(30) Priorität: 26.09.2003 DE 10346072
(43) Veröffentlichungstag der Anmeldung: 30.03.2005
(73) Patentinhaber: Erlas Erlanger Lasertechnik GmbH, 91056 Erlangen (DE)
(72) Erfinder: Hoffmann, Peter, Dr.-Ing., 90425 Nürnberg (DE); Bronnsack, Peter, Dipl.-Ing., 90763 Fürth (DE)
(74) Vertreter: LOUIS, PÖHLAU, LOHRENTZ

(56) Entgegenhaltungen:
- EP-A- 0 852 984
- EP-A- 1 087 134
- US-A- 4 041 270

## Beschreibung

Die Erfindung betrifft ein Verfahren zum Verschweißen mindestens zweier vorzugsweise metallischer Bauteile mittels eines Energiestrahls, vorzugsweise eines Laserstrahls, entlang eines Schweißstoßes, sowie einen aus mindestens zwei Bauteilen zusammengesetzten Körper, vorzugsweise Hohlraumkörper, der vorzugsweise nach oben genanntem Verfahren hergestellt wird, sowie die Verwendung einer Laseranlage zur Herstellung eines derartigen zusammengesetzten Körpers.

Die Verwendung von aus mehreren metallischen Bauteilen zusammengesetzten Hohlraumkörpern in der Industrie ist weit verbreitet.

Ein bekanntes Anwendungsbeispiel für einen aus metallischen Bauteilen zusammengesetzten Hohlraumkörper ist ein Verteilerring für das Verteilen von Flüssigkeiten in Flaschen. Ein derartiger Verteilerring hat einen Durchmesser von bis zu 6 m und weist einen umlaufenden Verteilerkanal auf, der als Hohlkanal mit einer Vielzahl von Öffnungen ausgebildet ist. Die Öffnungen sind mit Zu- und Ableitungen bzw. mit Ventilen verbunden. Bei der Befüllung von Flaschen wird die Flüssigkeit in den Verteilerkanal eingebracht und über die Ventile in die Flaschen geleitet.

Der Verteilerkanal wird durch eine radial umlaufende, im Querschnitt rechteckige Nut in dem Verteilerringkörper und einen auf den Verteilerringkörper als Deckel für die Nut aufgeschweißtes Band gebildet. Die Verschweißung von Deckelband mit dem Verteilerringkörper erfolgt bei den bekannten Verfahren über ein mehrlagiges WIG-Schweißen mit einer Schweißgeschwindigkeit von etwa 100 mm/min. Die Mehrlagigkeit der Schweißnaht ist erforderlich, um den Anbindungsquerschnitt zwischen Band und eigentlichem Verteilerring belastungsgerecht auszuführen, da während des Betriebs in den Verteilerkanälen große Drücke auftreten.

Dieses bekannte Herstellungsverfahren für Verteilerringe weist als wesentliche Nachteile auf, dass die Bearbeitungszeit zum Aufschweißen der Bänder auf den Verteilerringkörper sehr lange ist und, dass der Verteilerring sich durch die Erwärmung während des langen Schweißvorgangs verzieht.

Um die genannten Nachteile zu vermeiden wurde versucht das Deckelband und den Verteilerringkörper mittels Laserstrahlschweißen zu verbinden. Zwar wurden die oben genannten Probleme - lange Bearbeitungszeit und Verzug des Verteilerrings - stark verringert, es traten aber neue Probleme auf:

Der Schweißstoß wurde, insbesondere im Bereich des Hohlraums des Verteilerkanals, nicht vollständig aufgeschmolzen, so dass im Fußbereich des Schweißstoßes zum Hohlraum hin geöffnete Spalten zwischen Deckel und Ring verbleiben. Diese Spalten verhindern eine effektive Reinigung des Verteilerkanals, da sich in den Spalten Schmutzpartikel festsetzen können. Weiterhin kann bei Belastung die durch die Spalten auftretende Kerbwirkung zu einem Versagen der Laserschweißnaht führen.

Als weiteres Problem wurde erkannt, dass der Hohlraum durch die beim Laserstrahltiefschweißen entstehende und zum Hohlraum - also zum Verteilerkanal - hin geöffnete Dampfkapillare durch Schweißspritzer stark verschmutzt wird, da durch die Dampfkapillare Schweißspritzer, Rauch und Schmauch austreten.

Das Problem mit den verbleibenden Spalten sowie die Verschmutzungen des Hohlraums durch Schweißspritzer bei der Fertigung führen dazu, dass Verteilerringe, die mit dem bekannten Laserschweißverfahren hergestellt werden z. B. nicht im Bereich der Lebensmittelindustrie eingesetzt werden können.

Bekannt sind auch Gehäuse für elektrische Schaltanlagen. Die Gehäuse sind in Plattenbauweise aufgebaut. Bei der Herstellung der Gehäuse wird zur Verbindung der Platten heute Laserschweißen eingesetzt. Um zu verhindern, daß in das Gehäuseinnere Schweißemissionen eintreten, wird die Schweißnaht unter einem spitzen Winkel zur Fuge, häufig vorzugsweise 5°, eingebracht. Das Eindringen von Emissionen in den Gehäuseinnenraum läßt sich auf diese Weise aber nicht zuverlässig verhindern.

Es ist Aufgabe dieser Erfindung, ein Verfahren zum Verschweißen zweier vorzugsweise metallischer Bauteile mittels eines Energiestrahls, vorzugsweise eines Laserstrahls, vorzuschlagen, das die genannten Probleme des Standes der Technik überwindet. Weiterhin ist es Aufgabe der Erfindung einen entsprechenden, aus mehreren Bauteilen zusammengesetzten Körper, vorzugsweise Hohlraumkörper und eine entsprechende Laseranlage zur Herstellung eines solchen zusammengesetzten Körpers vorzuschlagen.

Die Aufgaben werden gelöst durch die Gegenstände der unabhängigen Ansprüche 1 und 15.

Bei dem erfindungsgemäßen Verfahren zum Verschweißen zweier vorzugsweise metallischer Bauteile - im folgenden auch Werkstücke genannt - mittels eines Energiestahls, vorzugsweise eines Laserstrahls, entlang eines Schweißstoßes, ist vorgesehen, dass der Schweißstoß eine zu der vom Schweißkopf zugewandten Seite hin geöffnete Fuge und einen im Bereich des Fußes der Fuge angeordneten Anlagebereich aufweist, in dem die Bauteile aneinander anliegen und der den Schweißstoß an der vom Schweißkopf abgewandten Seite abschließt, wobei in einem ersten Verfahrensschritt die Bindepartner im Anlagebereich durch Wärmeleitungsschweißen unter Ausbildung einer Wärmeleitungsschweißnaht verbunden werden und in einem zweiten Verfahrensschritt die Bindepartner im Bereich der Fuge und entlang der Wärmeleitungsschweißnaht durch Laserstrahl-oder Elektronenstrahlschweißen, vorzugsweise Laserstrahl- oder Elektronenstrahltiefschweißen, verbunden werden, wobei die Wärmeleitungsschweißnaht verhindert, dass Prozessemissionen, insbesondere Schweißspritzer, Rauch oder Schmauch, beim Laserstrahl- oder Elektronenstrahlschweißen an der Werkstückinnenseite austreten.

Die zu verbindenden Werkstücke sind vorzugsweise aus Metall ausgebildet, können aber auch aus Kunststoff oder anderen Materialien bestehen.

Zur Erzeugung des Energiestrahls wird vorzugsweise eine Laseranlage, insbesondere eine Nd:YAG -, Dioden - oder CO₂- Laseranlage, verwendet, bei abgewandelten Ausführungsformen des Verfahrens können aber auch Elektronenstrahlschweißanlagen zur Erzeugung des Energiestrahls eingesetzt werden.

Die Werkstücke d.h. die zu verbindenden Bauteile werden aneinander anstoßend angeordnet, wobei zwischen den Werkstücken ein zu verschweißender Stoß - der Schweißstoß - gebildet wird. Der Schweißstoß wird bei den späteren Verfahrensschritten in Längsrichtung, also entlang der Längserstreckung geschweißt. In Quererstreckung umfasst der Schweißstoß eine zu der zum Schweißkopf zugewandten Seite hin geöffnete Fuge und einen am unteren Ende, also gegenüber der Öffnung der Fuge angeordneten, angeschlossenen Anlagebereich, in welchem die zwei zu verschweißenden Bauteile aneinander anliegen, also in Kontakt miteinander sind. Dieser Anlagebereich endet an der Werkstückinnenseite.

Bei dem ersten Verfahrensschritt wird durch vorzugsweise einen durch die zum Schweißkopf zugewandten Seite hin geöffnete Fuge eintretenden Energiestrahl der Anlagebereich vorzugsweise vollständig verschweißt, so dass an der Stelle des Anlagebereichs eine Wärmeleitungsschweißnaht entsteht.

Bei dem zweiten Verfahrensschritt wird der gleiche Abschnitt des Schweißstoßes wie beim Wärmeleitungsschweißen nochmals mit einem Energiestrahl überfahren, wobei die Bauteile im Bereich der Fuge vorzugsweise durch Wärmeleitungs- oder Tiefschweißen verbunden werden.

Die Begriffe "Wärmeleitungsschweißen" und "Tiefschweißen" sind aus der Lasertechnik bekannt und sollen im Sinn der Lasertechnik verstanden werden. Ausführungen und Erläuterungen zu diesen Begriffen sind z.B. in der Dissertation von Peter Hoffmann "Verfahrensfolge: Laserstrahlschneiden und - schweißen" erschienen im Carl Hauser Verlag zu finden. Als weitere Fundstellen werden genannt:
Strahlwerkzeug Laser, Prof. H. Hügel; B.G. Teubner Stuttgart 1992,
Beck, M. Dausinger, F. Hügel, H.: Modellvorstellungen zur Energieeinkoppelung von Laserstrahlen in Materie, in: Schweißtechnische Fertigungsverfahren Schutztechnik-Lichtbogentechnik. Düsseldorf: DVS.1989, S. 43-47;
Skript zur Vorlesung "Lasertechnik I + II" 2003, von Prof. R. Poprawe, Lehrstuhl für Lasertechnik RWTH Aachen.

Die beim ersten Verfahrensschritt erzeugte Wärmeleitungsschweißnaht verhindert, dass die beim zweiten Verfahrensschritt im Falle des Tiefschweißens entstehende Dampfkapillare sich zur Werkstückinnenseite hin öffnet und verhindert, dass Prozessemissionen, insbesondere Schweißspritzer, Rauch oder Schmauch an der Werkstückinnenseite austreten. Die beim Tiefschweißen entstehende Dampfkapillare ist in Richtung zu der vom Schweißkopf abgewandten Seite d.h. vorzugsweise die Werkstückinnenseite durch die Wärmeleitungsschweißnaht begrenzt.

Das Verfahren ist vorteilhaft ausgeführt, wenn der Energiestrahl von der Werkstückaußenseite zugeführt wird. Dies ist bspw. der Fall, wenn der Energiestrahl durch die zur Werkstückaußenseite geöffnete Fuge eintritt.

Bei dem zweiten Verfahrensschritt kann das Materialfehlvolumen des Schweißstoßes im Bereich der Fuge entweder durch Abschmelzen des stoßumliegenden Materials der Werkstücke oder durch Zusatzwerkstoff, vorzugsweise Pulver, Zusatzdraht etc. gefüllt werden. Der Zusatzwerkstoff kann entweder während des Schweißens automatisiert zugeführt werden oder als Zusatzmaterial vor dem zweiten Verfahrensschritt in die Fuge eingelegt werden.

Bei vorteilhaften Weiterbildungen des Verfahrens wird der Wärmeleitungsschweißprozess so geführt, dass die Bauteile durch die Wärmeleitungsschweißnaht zueinander fixiert sind. Diese Fixierung und/oder der vergleichsweise geringe Energieeintrag während des zweiten Verfahrensschritts führt dazu, dass der Verzug des Bauteils sehr gering gehalten wird.

Das Verfahren ist vorteilhaft ausgebildet, wenn der Wärmeleitungsschweißprozess so geführt wird, dass durch die Wärmeleitungsschweißnaht der Schweißstoß an der vom Schweißkopf abgewandten Seite, d.h. vorzugsweise der Werkstückinnenseite versiegelt ist. Dies ist insbesondere der Fall, wenn durch das Wärmeleitungsschweißen eine gleichmäßige glatte Schweißraupe an der Werkstückunterseite erzeugt wird. Die Versiegelung verhindert, dass Schmutzpartikel aus dem Schweißstoß zur Werkstückinnenseite hin austreten.

Es liegt eine vorteilhafte Ausgestaltung des Verfahrens vor, wenn der Wärmeleitungsschweißprozess so geführt ist, dass an der vom Schweißkopf abgewandten Seite, vorzugsweise der Werkstückinnenseite eine spaltfreie und/oder konkave Oberfläche ausgebildet wird. Eine derartige Ausbildung der Oberfläche verringert die Kerbwirkung und verhindert das Absetzen von Schmutzpartikeln an der vom Schweißkopf abgewandten Seite des Werkstückes, d.h. vorzugsweise der Werkstückinnenseite. Die Ausbildung der Wärmeleitungsschweißnaht an der betreffenden Werkstückseite, d.h. vorzugsweise Werkstückunterseite kann durch den Einsatz von geeigneten Formiergasen - z. B. He, Ar, H₂, N₂ oder Gemische dieser Gase - unterstützt werden.

Es liegt eine bevorzugte Ausführungsform des Verfahrens vor, wenn die Fuge V-förmig ausgebildet ist. Diese Ausbildung kann durch eine Abschrägung, Abrundung oder Abstufung von einen oder von beiden Werkstücken bzw. einer Fase bei einem oder beiden Werkstücken im Bereich des Schweißstoßes erreicht werden.

Die V-förmige Fuge kann einen Öffnungswinkel zwischen 15 und 45°, vorzugsweise zwischen 20 und 40° und insbesondere zwischen 25 und 35° aufweisen, wobei bei den Angaben von einem Vollwinkel ausgegangen wird. Der Öffnungsvollwinkel sollte größer als der Kaustikwinkel des einfallenden Laserstrahls ausgebildet sein, damit der Laserstrahl ohne zu große Absorption an den Fugenwänden bis in den Anlagebereich vordringen kann.

Bei abgewandelten Ausführungsformen kann die Fuge im Querschnitt im wesentlichen rechteckig ausgebildet sein, wobei vorzugsweise der Durchmesser des Laserstrahls im Anfangsbereich der Fuge kleiner die Breite der Fuge ausgebildet ist.

Bei bevorzugten Ausführungsformen ist vorgesehen, dass der Anlagebereich, also der Kontaktbereich zwischen den Werkstücken, flächig ausgebildet ist. Dieser flächige Anlagebereich ist in seinen Abmessungen so dimensioniert, dass er beim Wärmeleitungsschweißen vollständig aufgeschmolzen wird. Bei abgewandelten Ausführungsformen ist vorgesehen, die Stoßgeometrie so auszuführen, dass die an den Anlagebereich angrenzenden Massen der Werkstücke so verteilt sind, dass die Wärmeableitung vom Anlagebereich in die Werkstücke bei beiden Werkstücken in etwa gleich stark ist.

Vorzugsweise wird das Verfahren verwendet, um zwei Werkstücke zu verbinden, die einen Hohlraum bilden, wobei die Werkstückinnenseite dem Hohlraum zugewandt ist. Der Hohlraum kann ein vollständig abgeschlossener oder ein mit mehreren Öffnungen und/oder Durchbrüchen versehener Hohlraum sein. Das Verfahren findet auch Anwendung für die Verbindung von Werkstücken, wobei der Schweißstoß von einer Seite, insbesondere der Werkstückinnenseite, für den Energiestrahl schwer oder nicht zugänglich ist.
Insbesondere kann das Verfahren für die Herstellung eines Verteilerrings der eingangs beschriebenen Art Verwendung finden, der aus einem Verteilerringkörper mit umlaufender Nut und einem Band besteht, wobei das Band zum Verschließen der Nut auf den Verteilerringkörper aufgeschweißt wird. Der Verteilerring kann auch mehrere Verteilerkanäle aufweisen.

Die der Erfindung zugrundeliegende Aufgabe wird weiterhin mit dem aus mehreren Bauteilen zusammengesetzten Körper gemäß Anspruch 15 gelöst. Vorzugsweise kann es sich um einen Hohlraumkörper handeln, der aus einem Grundkörper und einem Deckel besteht, die zusammen einen Hohlraum bilden und mit mindestens einer Laserschweißnahtanordnung miteinander verbunden sind, wobei die Laserschweißnahtanordnung sich durchgehend von der Außenseite des Hohlraumkörpers bis zum Hohlraum erstreckt, wobei die Laserschweißnahtanordnung vorzugsweise aus einer Wärmeleitungsschweißnaht und einer Tiefschweißnaht besteht und wobei vorgesehen ist, dass die Wärmeleitungsschweißnaht an dem Hohlraum angrenzend ausgebildet ist und die Tiefschweißnaht durch die Wärmeleitungsschweißnaht zum Hohlraum hin begrenzt ist.

Die Laserschweißnahtanordnung ist als eine Aneinanderreihung einer ersten und einer zweiten Schweißnaht, vorzugsweise einer Wärmeleitungsschweißnaht und einer Tiefschweißnaht ausgeführt, wobei die Laserschweißnahtanordnung mit der Tiefschweißnaht im Falle des Hohlkörpers an der Außenseite des Hohlkörpers beginnt. An die Tiefschweißnaht direkt angeschlossen ist die Wärmleitungsschweißnaht, die mit ihrem Endabschnitt an den Hohlraum des Hohlraumkörpers unmittelbar angrenzt. Der Tiefschweißeffekt und damit die Herstellung der Tiefschweißnaht wird durch Ausbildung einer Dampfkapillare erreicht. Die Einschweißtiefe ist größer gleich der Eindringtiefe der Dampfkapillaren. An den Wänden der Dampfkapillare wird die Laserstrahlung absorbiert. Es entsteht ein die Dampfkapillare umschließendes Schmelzebad, das nach der Erstarrung die Tiefschweißnaht ausbildet. Die Tiefschweißnaht dringt in die Wärmeschweißnaht ein, durchdringt sie jedoch nicht vollständig.

Bei bevorzugten Ausführungsformen ist vorgesehen, dass der an den Hohlraum angrenzende Oberflächenabschnitt der Wärmeleitungsschweißnaht konkav ausgebildet ist. Die konkave Oberfläche verhindert sehr effektiv eine Ablagerung von Schmutzpartikeln und erleichtert die Reinigung des Hohlraums. Weiterhin vermindert die konkave Oberfläche die Kerbwirkung an der Fügestelle durch angreifende Kräfte.

Vorzugsweise handelt es sich bei dem Hohlraumkörper um einen Verteilerring der eingangs beschriebenen Art.

Die Laseranlage weist vorzugsweise eine Führungsmaschine, insbesondere eine kartesische Führungsmaschine oder einen Roboter auf, um den Schweißkopf relativ zum Werkstück präzise geführt zu bewegen. Hierbei kann alleine der Schweißkopf oder alleine das Werkstück oder beide bewegt werden.

Bei bevorzugten Ausführungsformen weist die Laseranlage Spannmittel auf, mit der die beiden Werkstücke zueinander fixiert werden. Bei den Spannmitteln kann es sich um statische Spannmittel, z.B. Spannklauen, oder dynamische Spannmittel, z.B. Andruckrollen oder Andruckfinger, die mit dem Energiestrahl mitbewegt werden, handeln.

Die Laseranlage weist ein Laseraggregat auf, das vorzugsweise aus einem CO₂-oder Nd:YAG-Laser oder einen Diodenlaser oder einen CO₂-Laser mit einer Ausgangsleistung über 1.000 Watt gebildet ist.

Bei vorteilhaften Weiterbildungen der Laseranlage weist diese einen Stossverfolgungssensor auf, der die Lage des Schweißstoßes sensorisch erfasst. Der Sensor kann als optischer - insbesondere als Lichtschnittsensor - oder als taktiler Sensor ausgebildet sein. Die gemessenen Sensorwerte werden entweder On-Line, d.h. während der laufenden Bearbeitung, oder Off-Line, d.h. vor der Bearbeitung mit einer programmierten Bearbeitungsbahn verrechnet oder bilden die Grundlage für die Erstellung einer Bearbeitungsbahn.

Weitere Merkmale und Einzelheiten der Erfindung sind anhand der nachfolgenden Zeichnungen und Beschreibungen dargestellt. Es zeigen:
- Figur 1: eine schematische Schnittansicht eines Hohlraumprofils mit Deckblech als ein erstes Ausführungsbeispiel eines Hohlraumkörpers;
- Figur 2a,b,c,d: jeweils eine Ausschnittsvergrößerung des Details A in Figur 1 mit abgewandelten Ausführungen der Stoßgeometrie;
- Figur 3a,b,c: jeweils einen Querschliff des Details A in Figur 1 nach dem Wärmeleitungsschweißen in schematischer Darstellung;
- Figur 4: einen Querschliff des Details A in Figur 1 nach dem Tiefschweißvorgang in schematischer Darstellung;
- Figur 5: eine schematische Schnittansicht eines Verteilerrings als ein zweites Ausführungsbeispiel eines Hohlraumkörpers;
- Figur 6: eine schematische perspektivische Darstellung eines rechteckigen Behälters mit Deckel als drittes Ausführungsbeispiel eines Hohlraumkörpers.

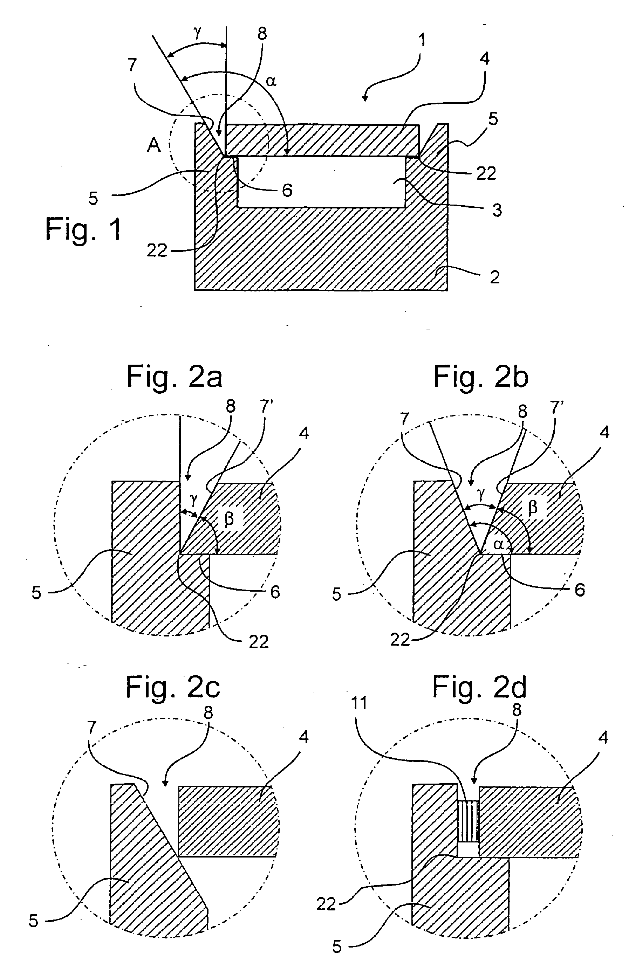

Figur 1 zeigt ein U-Profil 2, das in Längserstreckung durch ein aufgelegtes Deckelband 4 verschlossen ist, so dass ein Hohlraumkörper 1 mit einem rechteckigen Hohlraum 3 gebildet wird. Der Hohlraumkörper 1 ist in Figur 1 im unverschweißten Zustand dargestellt.

Das U-Profil 2 besteht aus einem rechteckigen Grundkörper, an den zwei zueinander parallele und zueinander spiegelsymmetrische Schenkel 5 angeordnet sind, wobei Grundkörper und Schenkel 5 in der Darstellung in Figur 1 ein stehendes U bilden. Abgewandelte U-Profilkörper mit unsymmetrischen Schenkeln z.B. mit unterschiedlich langen und/oder unparallelen Schenkeln sind denkbar. Das U-Profil kann als einstückiger, vorzugsweise stranggepreßter oder spannend hergestellter einstückiger Körper oder aber auch als mehrteilig zusammengesetzter Körper ausgebildet sein.

Die beiden Schenkel 5 weisen an ihren zum Hohlraum 3 gerichteten Innenseiten jeweils eine Stufe mit einem waagrechten, parallel zum Boden des Hohlraums 3 ausgerichteten Auflageabsatz 6 auf. Die Auflageabsätze 6 sind auf den Schenkeln 5 gegenüberliegend in gleicher Höhe angeordnet.

Die an die Auflageabsätze 6 anschließenden Schenkelendabschnitte sind jeweils an der Innenseite unter Ausbildung einer Fase 7 angeschrägt. Die Fasen 7 sind voneinander divergierend ausgerichtet. Zwischen der Fase 7 und dem Auflageabsatz 6 ist jeweils ein stumpfer Winkel alpha von etwa 120° ausgebildet. Die Fase 7 schließt sich jeweils unmittelbar an den Auflageabsatz 6 unter Ausbildung einer Kante 22 an und erstreckt sich bis zum distalen Ende des Schenkels 5.

Das Deckelband 4 ist im Querschnitt rechteckig ausgebildet und ist liegend auf die Aufnahmeabsätze 6 des U-Profils 2 angeordnet, wobei die Innenseiten des U-förmigen Profils 2 und die Unterseite des Deckelbands 4 den im Querschnitt rechteckigen Hohlraum 3 bilden. Die Randbereiche der Unterseite - also der zum Hohlraum 3 gewandten Seite - des Deckelbands 4 und die Auflageabsätze 6 des U-Profils 2 sind miteinander in flächigen Kontakt. Das Deckelband 4 liegt auf den Auflageabsätzen 6 beidseitig abgestützt auf, wobei die linke Unterkante des Deckelbands 4 nahe zur Kante 22 des linken Auflageabschnitts 6 und die rechte Unterkante des Deckelbands 4 nahe zur Kante 22 des rechten Auflageabsatzes 6 anliegt. Die Toleranz für die Breite des Deckelbandes wird durch die Breite des Auflageabsatzes festgelegt. Die Breite darf maximal den Abstand der Kanten 22 zueinander betragen. Das Minimalmaß der Deckelbreite errechnet sich aus der Breite des Hohlraums zuzüglich der Breite des Auflageabsatzes 6 zuzüglich ca. 0,2 mm.

Wie in Figur 1 zu erkennen ist, wird bei eingelegtem Deckelband 4 jeweils eine V-förmige Fuge 8 zwischen den Schmalseiten des Deckelbands 4 und den Fasen 7 gebildet. Diese Fuge 8 ist zur Außenseite des Hohlraumkörpers 1 in Figur 1 nach obenhin größer werdend ausgebildet und weist im Querschnitt einen spitzen Öffnungswinkel gamma von ca. 30° auf.

Wie später noch detaillierter erläutert wird, wird das Deckelband 4 mit dem U-Profil 2 im Bereich der Auflageabsätze 6, die die Auflage für das Deckelband 4 bilden, in einem ersten Schritt durch Wärmeleitungsschweißen stoffschlüssig verbunden. Die V-förmige Fuge wird in einem zweiten Bearbeitungsschritt durch Lasertiefschweißen geschlossen. Bei beiden Bearbeitungsschritten wird der Laserstrahl von der Hohlraumkörperaußenseite in die Fuge 8 eingestrahlt.

Anhand der Figuren 2a - 2d werden alternative Ausführungsformen für die Stoßgeometrie in Figur 1 erläutert. Dabei ist jeweils der Ausschnitt gezeigt, der dem Detail A in Figur 1 entspricht, und im wesentlichen den Schweißstoß darstellt.

Figur 2a zeigt eine erste abgewandelte Ausführungsform des Details A in Figur 1. Es ist ein Schenkel 5 und ein auf einem Auflageabsatz 6 des Schenkels 5 aufliegendes Deckelband 4 gezeigt, wobei zwischen Schenkel 5 und Deckelband 6 eine Fuge 8 ausgebildet ist. Die Fuge 8 ist ähnlich zu der Fuge in Figur 1 V-förmig, wird jedoch abweichend davon gebildet wie nachfolgend erläutert wird:

In der Figur 2a weist der Schenkel 5 nur noch eine rechtwinklige Ausnehmung auf. Die Fase 7 am Schenkel 5 in Figur 1 ist am Schenkel 5 in Figur 2a nicht vorhanden. Die rechtwinklige Ausnehmung umfasst einen Auflageabsatz 6, der analog zur Ausführung in Figur 1 parallel zum Boden des Hohlraums 3 ausgerichtet ist, und einen unmittelbar an den Auflageabsatz 6 angeschlossenen senkrechten Abschnitt. Das Deckelband 4 in Figur 2a ist in Abweichung zu der Ausführung in Figur 1 in Längserstreckung jeweils seitlich durch eine Fase 7' abgeschrägt, so dass im Querschnitt zwischen Unterseite und Schmalseite des Deckelbands 4 ein spitzer Winkel beta von ca. 60° ausgebildet ist. Die Fuge 8 wird bei auf den Auflageabsätzen 6 aufliegendem Deckelband 4 zwischen dem senkrechten Abschnitt der rechtwinkligen Ausnehmung des Schenkels 5 und der abgeschrägten Seite des Deckelbands 4 gebildet. Die Fuge weist dabei einen spitzen Öffnungswinkel gamma von ca. 30° auf.

Figur 2b zeigt eine zweite abgewandelte Ausführungsform des Details A in Figur 1, wobei der Schenkel 5 wie bei der Ausführung in Figur 1 mit einem Auflageabsatz 6 und mit einer Fase 7 mit einem Winkel alpha ausgebildet ist. Das Deckelband 4 weist wie in der Ausführung in Figur 2a eine Fase 7' mit einem Winkel beta auf. Bei der Ausführung in Figur 2b betragen - abweichend von den bereits beschriebenen Ausführungen - der Winkel alpha ca. 100° und der Winkel beta ca. 80°. Die Fuge 8 wird bei auf den Auflageabsätzen 6 aufliegendem Deckelband 4 zwischen der Fase 7 des Schenkels 5 und der Fase 7' des Deckelbands 4 gebildet. Die Fuge weist dabei einen spitzen Öffnungswinkel gamma von ca. 20° auf.

Figur 2c weist eine dritte alternative Ausführungsform des Details A in Figur 1 auf, wobei der Schenkel 5 nur eine Fase 7 aber keine Stufe aufweist. Die Fase 7 entspricht im wesentlichen der Fase 7 in Figur 1. Das Deckelband 4 ist in Figur 2c im Querschnitt rechteckig ausgebildet und liegt mit seiner unteren Längskante auf der Fase 7 des Schenkels 5 linienförmig auf. Die Fuge 8 wird zwischen der Fase 7 des Schenkels 5 und der Schmalseite des Deckelbands 4 gebildet. Als mögliche Weiterbildung kann der aufliegende Kantenbereich des Deckelbands 4 mit einer Fase abgeflacht sein, die komplementär zur Fase 7 des Schenkels 5 auf diesem aufliegend ausgebildet ist.

Figur 2d zeigt ein weiteres Ausführungsbeispiel des Details A in Figur 1, wobei die Fuge 8 in Figur 2d im Querschnitt im wesentlichen rechteckig ausgebildet ist. Der Schenkel 5 weist wie in Figur 2a eine rechtwinklige Ausnehmung mit einem senkrechten Abschnitt und mit einem waagrechten Auflageabsatz 6 auf, wobei der Auflageabsatz 6 gegenüber der Ausführung in Figur 2a verbreitert ist. Das Deckelband 4 weist einen im wesentlichen rechteckigen Querschnitt auf und liegt mit seinem Randbereich auf dem Auflageabsatz 6 auf. Die Fuge 8 wird bei auf den Auflageabsätzen 6 aufliegendem Deckelband 4 zwischen dem senkrechten Abschnitt der rechtwinkligen Ausnehmung des Schenkels 5 und der Schmalseite des Deckelbands 4 gebildet. Im Unterschied zu den in den Figuren 1 und 2a - 2c dargestellten Ausführungsformen liegt im Ausführungsbeispiel in Figur 2d die Unterkante des Deckelbands 4 nicht in dem Kantenbereich 22 des Schenkels 5 an, sondern mit Abstand zur Kante 22. Zur Sicherstellung der richtigen Breite der Fuge 8 kann ein Abstandshalter 11 zwischen Schenkel 5 und Deckelband 4 vorgesehen sein.

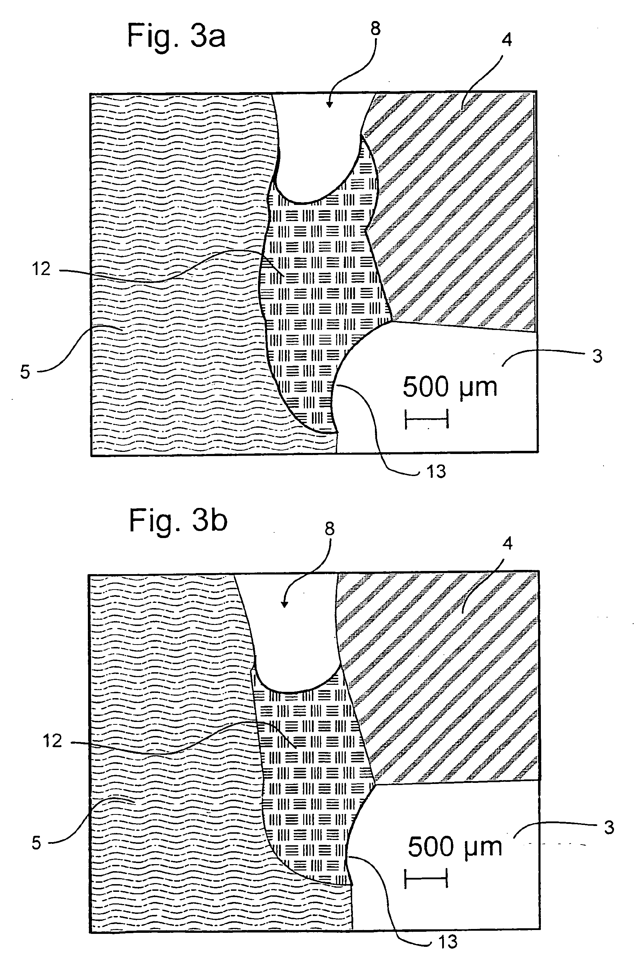

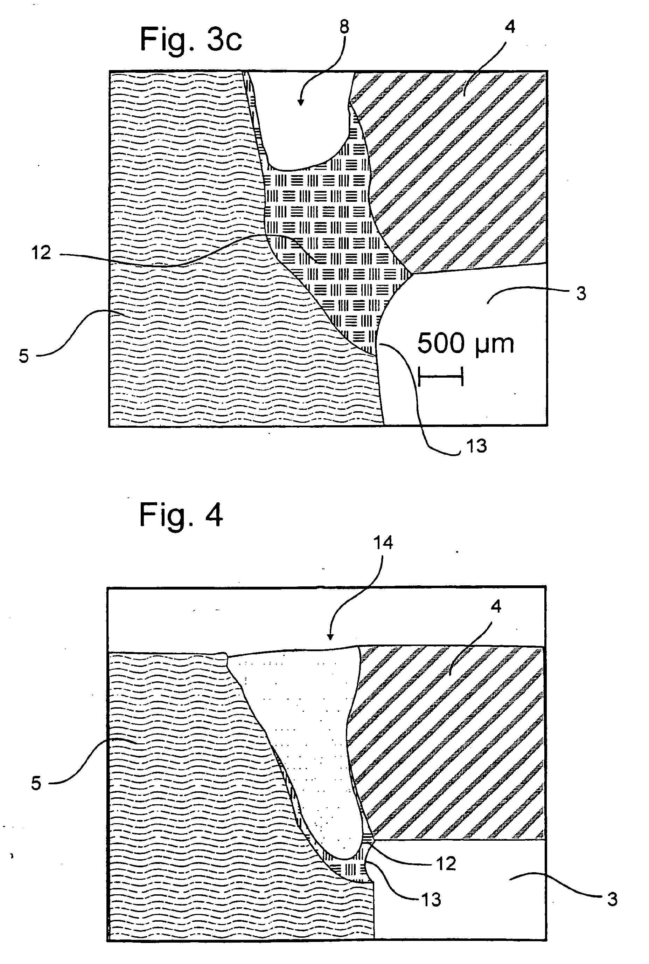

Figuren 3 a, b, c zeigen in schematisierter Darstellung jeweils einen Querschliff des in Detail A in Figur 1 oder 2a-2d dargestellten Abschnitts des Hohlraumkörpers 1 nach der Wärmeleitungsschweißung mittels eines Nd:YAG-Lasers.

Es sind jeweils ein Ausschnitt des Schenkels 5 und ein Ausschnitt des Deckelbands 4 gezeigt, die durch eine Wärmeleitungsschweißnaht 12 stoffschlüssig miteinander verbunden sind.

Die Position der Wärmeleitungsschweißnaht 12 entspricht der Position der Anlagefläche des Deckelbands 4 an den Schenkel 5 in den Figuren 1 und 2 a-d.

Auf Seiten des Hohlraums 3 ist die Oberfläche der Wärmeleitungsschweißnaht 12 konkav ausgebildet, so dass sich eine rinnenartige Hohlkehle 13 bildet. Die Hohlkehle 13 geht in ihren Randbereichen in die Unterseite des Deckelbands 4 bzw. in die Innenfläche des Schenkels 5 über.

Die der Fuge 8 zugewandte Oberfläche der Wärmeleitungsschweißnaht 12 ist ebenfalls konkav ausgebildet. Deckelband 4 und Schenkel 5 weisen nur einen geringen Anbindungsquerschnitt auf, da der Großteil der V-förmigen Fuge 8 nach dem Wärmeleitungsschweißen noch nahezu unverändert erhalten und ungefüllt ist.

Es wird vermutet, dass sich die konkave Oberflächenform aufgrund von Oberflächenspannungen während bzw. nach dem Wärmeleitungsschweißen selbsttätig ausbildet.

Die Bearbeitungsparameter für die drei Bearbeitungsbeispiele sind der nachfolgenden Tabelle zu entnehmen.

Die Figur 4 zeigt einen Querschliff des im wesentlichen gleichen Ausschnitts wie die Figuren 3a - 3c nach nochmaligem Überschweißen der Wärmeleitungsschweißnaht 13 mit einer Tiefschweißung mittels eines Nd:YAG-Lasers. Bei dem dargestellten Beispiel wurde bei der Tiefschweißung Zusatzwerkstoff in Form von Zusatzdraht zugeführt und die V-förmige Fuge mit einer einzigen Schweißung vollständig aufgefüllt.

Deckelband 4 und Schenkel 5 sind in Figur 4 über einen Anbindungsquerschnitt, der in etwa der Dicke des Deckelbands entspricht, miteinander verbunden.

Die gesamte Schweißnaht kann in zwei Bereiche unterteilt werden:

Der untere Bereich umfasst die Wärmeleitungsschweißnaht 12, die angrenzend zum Hohlraum 3 angeordnet ist. Die Wärmeleitungsschweißnaht 12 weist auch nach der zweiten Überschweißung eine Hohlkehle 13 wie in den Figuren 3 a-c auf.

Der obere Bereich der Schweißnaht wird durch die Tiefschweißnaht 14 gebildet, die an der Hohlraumkörperaußenseite beginnt und in der Wärmeleitungsschweißnaht 12 endet. Die Tiefschweißnaht 14 ist unter Bildung einer Dampfkapillare gebildet. Die Tiefschweißnaht ist im Querschnitt trichterförmig ausgebildet. Sie reicht bis an die Wärmeleitungsschweißnaht 12 heran, bzw. endet in dieser, aber sie durchdringt die Wärmeleitungsschweißnaht 12 nicht. Dies ist ein Indikator dafür, dass auch während des Tiefschweißens die Wärmeleitungsschweißnaht 12 keine Schweißspritzer aus der Dampfkapillare 15 in den Hohlraum 3 eindringen konnten.

Bei anders gewählten Bearbeitungsparametern, wie z.B. höheren Streckenenergien beim Lasertiefschweißen, ist die hohlraumseitige Oberfläche der Wärmeleitungsschweißnaht 12 konvex ausgebildet. Es wird vermutet, dass es sich hierbei um einen Grenzfall handelt, bei dem die Wärmeleitungsschweißnaht 12 während des Tiefschweißens fast vollständig aufgeschmolzen wird und durch den Druck der Dampfkapillare konvex verformt wird. Der Druck der Dampfkapillare reicht jedoch in diesem Fall nicht dazu aus, dass sich die Dampfkapillare zum Hohlraum 3 hin öffnet.

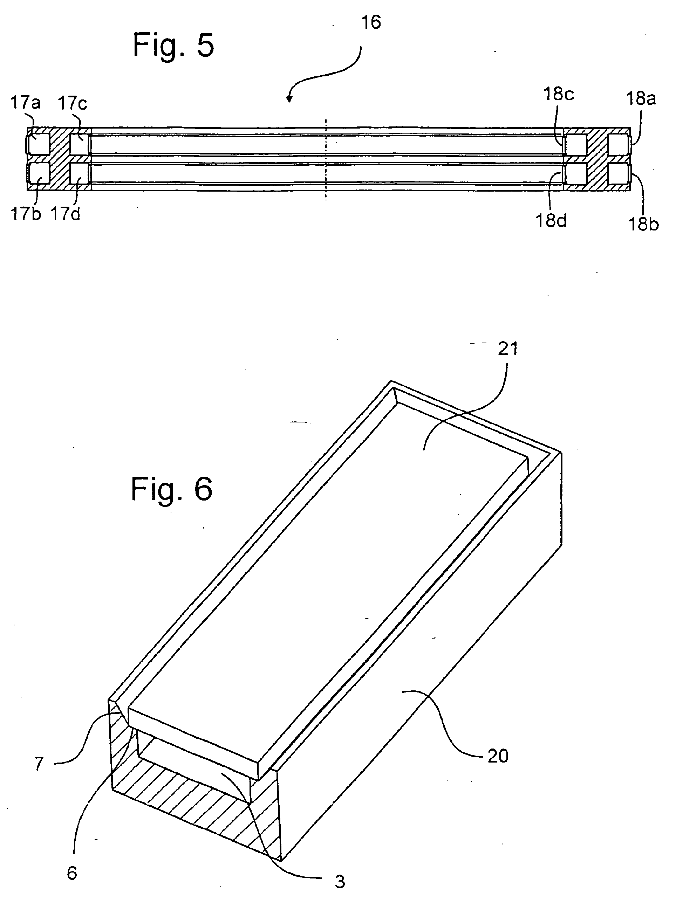

Figur 5 zeigt einen Querschnitt durch einen Verteilerring 16 mit vier radial umlaufenden Verteilerkanälen 17 a,b,c,d. Zwei Verteilerkanäle 17 a,b sind außen umlaufend und zwei Verteilerkanäle 17 c,d innen umlaufend im Verteilerring 16 angeordnet. Bei abgewandelten Ausführungen von Verteilerringen können die Kanäle beliebig anders angeordnet und ausgebildet sein, z.B. auch anstelle oder zusätzlich zu den Kanälen mit radialen Öffnungen auch Kanäle mit axialen Öffnungen.

Jeder Verteilerkanal 17 a,b,c,d wird durch eine im Querschnitt rechteckige Ringnut im Verteilerring 16 gebildet, deren radial nach außen bzw. nach innen gerichtete Öffnung durch ein aufgeschweißtes Deckelband 18 a,b,c,d verschlossen ist. Die Ringnuten sind in axialer Richtung durch umlaufende Ringstege begrenzt.
Pro Verteilerkanal 17 a,b,c,d ist ein Deckelband 18 a,b,c,d vorgesehen, das mit jeweils zwei radial umlaufenden Schweißnähten auf die zugehörigen Ringstege aufgeschweißt ist.

Die Ringstege und die Deckelbänder 18 a,b,c,d weisen vor dem Verschweißen eine der Stoßgeometrien auf wie in den Figuren 1, 2 a-d gezeigt. In einem ersten Verfahrensschritt werden die Deckelbänder mit den Ringstegen durch Wärmeleitungsschweißen verbunden, wobei sich eine Nahtgeometrie ergibt, wie beispielhaft in den Figuren 3 a-c dargestellt. In einem zweiten Schritt werden Deckelband und Ringstege durch Lasertiefschweißen unter Zuführung von Zusatzdraht nochmals verschweißt, wobei die im ersten Schritt erzeugte Wärmeleitungsschweißnaht nochmals in gesamter Länge überschweißt wird. Es ergibt sich eine Nahtgeometrie wie beispielhaft in Fig. 4 gezeigt.

Es ist vorteilhaft, wenn das Deckelband 18 a,b,c,d zunächst an allen Verbindungsstellen durch Wärmeleitungsschweißen fixiert wird und erst nach der Fixierung das Tiefschweißen erfolgt.

Figur 6 zeigt einen Behälter 20 mit aufgelegtem Deckel 21 im unverschweißten Zustand in perspektivischer Ansicht, wobei zur Illustration der Stoßgeometrie der vordere Bereich in Schnittdarstellung gezeigt ist. Durch den Behälter 20 und den aufgelegten Deckel 21 wird ein im Querschnitt rechteckiger Hohlraum 3 gebildet.

Der Bereich in dem der Deckel 21 auf dem Behälter 20 aufliegt ist nahezu identisch zu der in Figur 1 gezeigten Stoßgeometrie ausgeführt. Es wird auf die dortige Beschreibung verwiesen. In einem ersten Verfahrensschritt wird der Deckel 21 mit dem Behälter 20 zunächst durch eine um den Deckel 21 umlaufende Wärmeleitungsschweißnaht und in einem zweiten Schritt durch eine Tiefschweißnaht verbunden. Beide Schweißungen werden mit einem Laser durchgeführt.

Derartige verschweißte Behälter werden beispielsweise im Schaltanlagenbau verwendet, wobei in den Behältern Schaltelemente und ein Schutzgas (SF₆) vorgesehen sind.

Bei weiteren Ausführungsformen von Hohlraumkörpern, z.B. Hohlraumprofile wie in Figur 1, Verteilerringe wie in Figur 5 oder Behälter mit Deckel wie in Figur 6, werden die verschiedenen Stoßgeometrien in den Figuren 1, 2a- 2d in Kombination verwendet. Die Hohlraumkörper können gerade oder gekrümmte Halbzeuge, z.B.

Bänder oder Profilträger, mit genannten Profil aufweisen, die zu kreisförmigen, elliptischen Ringen oder Vielecken, z.B. Rechtecken, zusammengesetzt sind.

## Patentansprüche

1. Verfahren zum Verschweißen mindestens zweier vorzugsweise metallischer Bauteile (2, 4, 20, 21) mittels eines Energiestrahls, vorzugsweise eines Laserstrahls, entlang eines Schweißstoßes, wobei der Schweißstoß eine zu der dem Schweißkopf zugewandten Seite geöffnete Fuge (8) und einen im Bereich des Fußes der Fuge (8) angeordneten Anlagebereich (6) aufweist, in dem die Bauteile aneinander anliegen und der den Schweißstoß an der von dem Schweißkopf abgewandten Seite abschließt, wobei
in einem ersten Verfahrensschritt die Bauteile (2, 4, 20, 21) im Anlagebereich (6) durch Wärmeleitungsschweißen unter Ausbildung einer Wärmeleitungsschweißnaht (12) verbunden werden, wobei der Energiestrahl beim Wärmeleitungsschweißen von der dem Schweißkopf zugewandten Seite zugeführt wird, und
in einem zweiten Verfahrensschritt die Bauteile im Bereich der Fuge und entlang der Wärmeleitungsschweißnaht durch Laserstrahl- oder Elektronenstrahltiefschweißen verbunden werden, wobei der Energiestrahl beim Tiefschweißen von der dem Schweißkopf zugewandten Seite zugeführt wird, die Wärmeleitungsschweißnaht (12) verhindert, dass Prozessemissionen, nämlich Schweißspritzer, Rauch oder Schmauch, beim Laserstrahl- oder Elektronenstrahlschweißen an der von dem Schweißkopf abgewandten Seite der Schweißnaht austreten.

2. Verfahren nach Anspruch 1
**dadurch gekennzeichnet,**
**dass** beim Laserstrahl- oder Elektronenstrahlschweißen Zusatzwerkstoff, vorzugsweise Pulver, insbesondere Zusatzdraht, verwendet wird und/oder beim Laserstrahl- oder Elektronenstrahlschweißen eine Dampfkapillare ausgebildet wird.

3. Verfahren nach einem der vorhergehenden Ansprüche,
**dadurch gekennzeichnet,**
**dass** für das Wärmeleitungsschweißen eine Laseranlage, eine Elektronenstrahlanlage oder eine WIG-Schweißanlage oder eine MIG-Schweißanlage oder eine MAG-Schweißanlage verwendet wird.

4. Verfahren nach einem der vorhergehenden Ansprüche,
**dadurch gekennzeichnet,**
**dass** die Wärmeleitungsschweißnaht die Bauteile zueinander fixiert und/oder den Schweißstoß an der von dem Schweißkopf abgewandten Seite versiegelt.

5. Verfahren nach einem der vorhergehenden Ansprüche,
**dadurch gekennzeichnet,**
**dass** die Wärmeleitungsschweißnaht an der von dem Schweißkopf abgewandten Seite mit einer spaltfreien und/oder konkaven Oberfläche ausgebildet wird.

6. Verfahren nach einem der vorhergehenden Ansprüche,
**dadurch gekennzeichnet,**
**dass** die Fuge im Querschnitt zum Schweißkopf hin divergierende, vorzugsweise im wesentlichen V-förmig ausgebildet ist, wobei vorzugsweise vorgesehen ist, dass entweder beide Bauteile oder nur ein Bauteil eine Schräge zur Ausbildung der Fuge aufweisen bzw. aufweist.

7. Verfahren nach Anspruch 6,
**dadurch gekennzeichnet,**
**dass** der Öffnungsvollwinkel der im Querschnitt im wesentlichen V-förmigen Fuge zwischen 15° und 45°, vorzugsweise zwischen 20° und 40°, insbesondere zwischen 25° und 35°, liegt.

8. Verfahren nach einem der Ansprüche 6 oder 7,
**dadurch gekennzeichnet,**
**dass** der Kaustikwinkel oder der Öffnungsvollwinkel des einfallenden Laserstrahls kleiner als der Öffnungsvollwinkel der im wesentlichen V-förmigen Fuge ist.

9. Verfahren nach einem der Ansprüche 1 bis 5,
**dadurch gekennzeichnet,**
**dass** die Fuge im Querschnitt im wesentlichen rechteckig ausgebildet ist.

10. Verfahren nach einem der vorhergehenden Ansprüche,
**dadurch gekennzeichnet,**
**dass** der Anlagebereich flächig ausgebildet wird, wobei vorzugsweise vorgesehen ist, dass die Bauteile im Anlagebereich komplementär und/oder formschlüssig und/oder abdichtend ausgebildet sind und/oder im flächigen Kontakt miteinander stehen.

11. Verfahren nach Anspruch 10,
**dadurch gekennzeichnet,**
**dass** der Anlagebereich in Quererstreckung des Schweißstoßes kleiner als 2 mm,
vorzugsweise kleiner als 1 mm, und größer als 0,2 mm ist.

12. Verfahren nach einem der Ansprüche 1 bis 9,
**dadurch gekennzeichnet,**
**dass** der Anlagebereich linienförmig ausgebildet ist, wobei vorzugsweise vorgesehen ist, dass der Anlagebereich durch den Kontaktbereich zwischen einer Schräge des einen Bauteils und einer auf der Schräge aufliegenden Kante des anderen Bauteils gebildet wird.

13. Verfahren nach einem der vorhergehenden Ansprüche,
**dadurch gekennzeichnet,**
**dass** durch die beiden Bauteile ein Hohlraum gebildet wird, wobei die von dem Schweißkopf abgewandte Seite dem Hohlraum zugewandt ist.

14. Verfahren nach einem der vorhergehenden Ansprüche,
**dadurch gekennzeichnet,**
**dass** das Verfahren zur Herstellung von Verteilerringen verwendet wird, wobei vorgesehen ist, dass als das eine Bauteil ein Ring mit umlaufender Nut, vorzugsweise umlaufender U-förmiger Nut, eingesetzt wird und als das zweite Bauteil ein Band eingesetzt wird, wobei die Bauteile zusammen einen den Ring umlaufenden Hohlraum, insbesondere einen Verteilerkanal, bilden.

15. Aus mindestens zwei Bauteilen zusammengesetzter Körper, insbesondere Hohlraumkörper, vorzugsweise hergestellt nach dem Verfahren gemäß einer der Ansprüche 1 bis 15, mit einem ersten Bauteil, vorzugsweise als Grundkörper (2, 20) ausgebildet und einem zweiten Bauteil, vorzugsweise als-Deckel (4, 21) ausgebildet, vorzugsweise beide aus metallischem Material,
wobei das zweite Bauteil (4, 21) und das erste Bauteil (2, 20) aneinandergrenzen, vorzugsweise einen Hohlraum (3, 17a,b,c,d) bilden und mit mindestens einer Laserschweißnahtanordnung miteinander verbunden sind,
wobei die Laserschweißnahtanordnung sich durchgehend von einer ersten Seite, vorzugsweise der Außenseite des zusammengesetzten Körpers, vorzugsweise Hohlraumkörpers bis zu einer zweiten Seite des zusammengesetzten Körpers erstreckt, vorzugsweise bis zum Hohlraum (3, 17a,b,c,d) des Hohlraumkörpers,
wobei die Laserschweißnahtanordnung aus einer Wärmeleitungsschweißnaht (12) und einer als Tiefschweißnaht (14) ausgebildeten Laserstrahl- oder Elektronenstrahlschweißnaht besteht,
**dadurch gekennzeichnet,**
**dass** die Wärmeleitungsschweißnaht (12) an der zweiten Seite, vorzugsweise dem Hohlraum (3, 17a,b,c,d) angrenzend ausgebildet ist und die Tiefschweißnaht (14) durch die Wärmeleitungsschweißnaht (12) zur zweiten Seite, vorzugsweise zum Hohlraum (3, 17a,b,c,d) hin begrenzt ist.

16. Zusammengesetzter Körper nach Anspruch 15,
**dadurch gekennzeichnet,**
**dass** die Laserstrahl- oder Elektronenstrahlschweißnaht, die vorzugsweise als Tiefschweißnaht (14) ausgebildet ist, durch eine erstarrte Dampfkapillare (15) gebildet ist, die in die Wärmeleitungsschweißnaht (12) eindringt, jedoch diese nicht unter Durchbruch bis zu der von dem Schweißkopf abgewandten Seite der Schweißnaht durchdringt.

17. Zusammengesetzter Körper nach Anspruch 15 oder 16,
**dadurch gekennzeichnet,**
**dass** die Laserstrahl- oder Elektronenstrahlschweißnaht, die vorzugsweise als Tiefschweißnaht (14) ausgebildet ist, im Querschnitt zur ersten Seite des zusammengesetzten Körpers, vorzugsweise Außenseite des Hohlraumkörpers hin breiter wird und/oder das an der ersten Seite des zusammengesetzten Körpers, vorzugsweise Außenseite des Hohlraumkörpers die Dampfkapillareneingangsöffnung der Tiefschweißnaht (14) angeordnet ist.

18. Zusammengesetzter Körper nach einem der Ansprüche 15 bis 17,
**dadurch gekennzeichnet,**
**dass** die Tiefenerstreckungsachse, vorzugsweise die Längsmittelachse, der Laserstrahl oder Elektronenstrahlschweißnaht, die vorzugsweise als Tiefschweißnaht ausgebildet ist, relativ zur Oberfläche der ersten Seite, vorzugsweise der Außenseite des zusammengesetzten Körpers, vorzugsweise Hohlraumkörpers schräg angeordnet ist.

19. Zusammengesetzter Körper nach einem der Ansprüche 15 bis 18,
**dadurch gekennzeichnet,**
**dass** der an die zweite Seite, vorzugsweise den Hohlraum (3, 17a,b,c,d) angrenzende Abschnitt der Wärmeleitungsschweißnaht (12) eine konkave Oberfläche (13) aufweist.

20. Zusammengesetzter Körper nach einem der Ansprüche 15 bis 19,
**dadurch gekennzeichnet,**
**dass** der zusammengesetzte Körper als ein Verteilerring (16) mit mindestens einem im Verteilerring umlaufend ausgebildeten Hohlraum, insbesondere mindestens einem Verteilerkanal (17a,b,c,d), ausgebildet ist und vorzugsweise vorgesehen ist, dass der erste Körper, vorzugsweise Grundkörper als ein Ring mit mindestens einer umlaufenden Nut, insbesondere mindestens einer umlaufenden, vorzugsweise rechteckigen Nut, ausgebildet ist und/oder der zweite Körper, vorzugsweise Deckel als Band (18 a,b,c,d) ausgebildet ist.

## Claims

1. Process for welding at least two preferably metallic components (2, 4, 20, 21) by means of an energy beam, preferably a laser beam, along a welding joint, the welding joint having a groove (8) which is open towards the side facing towards the welding head and having an abutting region (6) which is arranged in the region of the base of the groove (8) and in which the components abut one another and which terminates the welding joint on the side facing away from the welding head, wherein
in a first process step, the components (2, 4, 20, 21) are joined in the abutting region (6) by heat conduction welding to form a heat conduction weld (12), the energy beam being supplied from the side facing towards the welding head during the heat conduction welding, and
in a second process step, the components are joined in the region of the groove and along the heat conduction weld by deep penetration laser-beam or electron-beam welding, the energy beam being supplied from the side facing towards the welding head during the deep penetration welding, the heat conduction weld (12) preventing process emissions, namely welding spatter, smoke or fumes, from emerging on the side of the weld facing away from the welding head during the laser-beam or electron-beam welding.

2. Process according to Claim 1, **characterized in that** filler material, preferably powder, in particular filler wire, is used in the laser-beam or electron-beam welding and/or a vapour capillary is formed during the laser-beam or electron-beam welding.

3. Process according to one of the preceding claims, **characterized in that** a laser unit, an electron-beam unit or a TIG welding unit or an MIG welding unit or an MAG welding unit is used for the heat conduction welding.

4. Process according to one of the preceding claims, **characterized in that** the heat conduction weld fixes the components in relation to one another and/or seals the welding joint on the side facing away from the welding head.

5. Process according to one of the preceding claims, **characterized in that** the heat conduction weld is formed with a gapless and/or concave surface on the side facing away from the welding head.

6. Process according to one of the preceding claims, **characterized in that** the groove is formed such that, in cross section, it diverges towards the welding head, preferably in a substantially V-shaped manner, it preferably being provided that either both components or only one component have or has a slope for the forming of the groove.

7. Process according to Claim 6, **characterized in that** the included, solid angle of the cross-sectionally substantially V-shaped groove lies between 15° and 45°, preferably between 20° and 40°, in particular between 25° and 35°.

8. Process according to either of Claims 6 and 7, **characterized in that** the caustic angle or the included solid angle of the incident laser beam is less than the included solid angle of the substantially V'-shaped groove.

9. Process according to one of Claims 1 to 5, **characterized in that** the groove is formed such that it is substantially rectangular in cross section.

10. Process according to one of the preceding claims, **characterized in that** the abutting region is made to be of a planar form, it preferably being provided that the components are formed such that they are complementary and/or form-fitting and/or sealing and/or are in planar contact with one another.

11. Process according to Claim 10, **characterized in that** the abutting region is less than 2 mm, preferably less than 1 mm, and greater than 0.2 mm in the transverse extent of the welding joint.

12. Process according to one of Claims 1 to 9, **characterized in that** the abutting region is of a linear form, it preferably being provided that the abutting region is formed by the contact region between a slope of one component and an edge of the other component resting on the slope.

13. Process according to one of the preceding claims, **characterized in that** a cavity is formed by the two components, the side facing away from the welding head facing towards the cavity.

14. Process according to one of the preceding claims, **characterized in that** the process is used for producing distributing rings, it being provided that a ring with a peripheral groove, preferably a peripheral U-shaped groove, is used as the one component and a band is used as the second component, the components together forming a cavity running around the ring, in particular a distributing channel.

15. Body assembled from at least two components, in particular a hollow body, preferably produced by the process according to one of Claims 1 to 15, with a first component, preferably formed as a base body (2, 20), and a second component, preferably formed as a cover (4, 21), preferably both of metallic material,
wherein the second component (4, 21) and the first component (2, 20) adjoin one another, preferably form a cavity (3, 17 a,b,c,d) and are connected to one another by at least one laser weld arrangement,
wherein the laser weld arrangement extends right through from a first side, preferably the outer side, of the assembled body, preferably a hollow body, to a second side of the assembled body, preferably to the cavity (3, 17 a,b,c,d) of the hollow body,
wherein the laser weld arrangement comprises a heat conduction weld (12) and a laser-beam or electron-beam weld formed as a deep weld (14),
**characterized**
**in that** the heat conduction weld (12) is formed on the second side, preferably adjoining the cavity (3, 17 a,b,c,d), and the deep weld (14) is delimited by the heat conduction weld (12) to the second side, preferably towards the cavity (3, 17. a, b, c, d).

16. Assembled body according to Claim 15, **characterized in that** the laser-beam or electron-beam weld, which is preferably formed as a deep weld (14), is formed by a solidified vapour capillary (15), which penetrates into the heat conduction weld (12), but does not penetrate and break through to the side of the weld facing away from the welding head.

17. Assembled body according to Claim 15 or 16, **characterized in that** the laser-beam or electron-beam weld, which is preferably formed as a deep weld (14) becomes wider in cross section to the first side of the assembled body, preferably towards the outer side of the hollow body, and/or in that the vapour capillary inlet opening of the deep weld (14) is arranged on the first side of the assembled body, preferably the outer side of the hollow body.

18. Assembled body according to one of Claims 15 to 17, **characterized in that** the axis of the extent in depth, preferably the longitudinal centre axis, of the laser-beam or electron-beam weld, which is preferably formed as a deep weld, is arranged obliquely in relation to the surface of the first side, preferably the outer side, of the assembled body, preferably a hollow body.

19. Assembled body according to one of Claims 15 to 18, **characterized in that** the portion of the heat conduction weld (12) adjoining the second side, preferably the cavity (3, 17 a,b,c,d), has a concave surface (13).

20. Assembled body according to one of Claims 15 to 19, **characterized in that** the assembled body is formed as a distributing ring (16) with at least one cavity formed such that it runs around in the distributing ring, in particular at least one distributing channel (17 a, b, c, d), and it is preferably provided that the first body, preferably a base body, is formed as a ring with at least one peripheral groove, in particular at least- one peripheral, preferably rectangular, groove, and/or the second body, preferably a cover, is formed as a band (18 a,b,c,d).

## Revendications

1. Procédé de soudage d'au moins deux pièces (2, 4, 20, 21) de préférence métalliques au moyen d'un faisceau d'énergie, de préférence un faisceau laser, le long d'un joint de soudure, ledit joint de soudure comportant une fente (8) ouverte vers le côté orienté vers la tête de soudage et une zone d'appui (6), disposée dans la zone du pied de la fente (8), dans laquelle les pièces sont en appui les unes contre les autres et laquelle termine le joint de soudure sur le côté opposé à la tête de soudage, dans lequel procédé
dans une première étape, les pièces (2, 4, 20, 21) sont assemblées dans la zone d'appui (6) par soudage par conduction de chaleur moyennant la formation d'un cordon de soudure (12), le faisceau d'énergie dans le soudage par conduction de chaleur étant acheminé depuis le côté orienté vers la tête de soudage, et
dans une deuxième étape, les pièces sont assemblées dans la zone de la fente et le long du cordon de soudure (12) par un soudage profond par faisceau d'électrons, le faisceau d'énergie dans le soudage profond étant acheminé depuis le côté orienté vers la tête de soudage, le cordon de soudure (12) empêchant que des émissions du processus, notamment des éclaboussures de métal en fusion, des fumées, s'échappent sur le côté opposé à la tête de soudage pendant le soudage par faisceau laser ou le soudage par faisceau d'électrons.

2. Procédé selon la revendication 1, **caractérisé en ce que** pendant le soudage par faisceau laser ou le soudage par faisceau d'électrons, on utilise un matériau d'apport, de préférence de la poudre, en particulier un fil d'apport, et/ou un capillaire de vapeur est formé pendant le soudage par faisceau laser ou le soudage par faisceau d'électrons.

3. Procédé selon l'une quelconque des revendications précédentes, **caractérisé en ce que**, pour le soudage par conduction de chaleur, on utilise une installation laser, une installation à faisceau d'électrons ou une installation de soudage à l'arc TIG ou une installation de soudage par procédé MIG ou une installation de soudage par procédé MAG.

4. Procédé selon l'une quelconque des revendications précédentes, **caractérisé en ce que** le cordon de soudure obtenu par conduction de chaleur fixe les pièces l'une contre l'autre et/ou scelle le joint de soudure sur le côté opposé à la tête de soudage.

5. Procédé selon l'une quelconque des revendications précédentes, **caractérisé en ce que** le cordon soudure par conduction de chaleur est réalisé sur le côté opposé à la tête de soudage avec une surface sans fente et/ou concave.

6. Procédé selon l'une quelconque des revendications précédentes, **caractérisé en ce que** la fente a une section divergeant vers la tête de soudage, de préférence réalisée sensiblement en forme de V, sachant qu'il est prévu de préférence que soit les deux pièces, soit seulement une pièce comportent ou comporte un chanfrein pour la réalisation de la fente.

7. Procédé selon la revendication 6, **caractérisé en ce que** l'angle complet d'ouverture de la fente avec une section sensiblement en forme de V se situe entre 15° et 45°, de préférence entre 20° et 40°, en particulier entre 25° et 35°.

8. Procédé selon la revendication 6 ou 7, **caractérisé en ce que** l'angle caustique ou l'angle complet d'ouverture du faisceau laser incident est inférieur à l'angle complet d'ouverture de la fente sensiblement en forme de V.

9. Procédé selon l'une quelconque des revendications 1 à 5, **caractérisé en ce que** la fente est réalisée avec une section sensiblement rectangulaire.

10. Procédé selon l'une quelconque des revendications précédentes, **caractérisé en ce que** la zone d'appui est plane, sachant qu'il est prévu de préférence que les pièces dans la zone d'appui sont réalisées de manière complémentaire et/ou par conjugaison de forme et/ou de manière étanche et/ou sont en contact plan l'une contre l'autre.

11. Procédé selon la revendication 10, **caractérisé en ce que** la zone d'appui dans la dimension transversale du joint de soudure est inférieure à 2 mm, de préférence inférieure à 1 mm, et supérieure à 0,2 mm.

12. Procédé selon l'une quelconque des revendications 1 à 9, **caractérisé en ce que** la zone d'appui est réalisée en forme de ligne, sachant qu'il est prévu de préférence que la zone d'appui est formée par la zone de contact entre un chanfrein de l'une des pièces et un bord de l'autre pièce en appui sur le chanfrein.

13. Procédé selon l'une quelconque des revendications précédentes, **caractérisé en ce qu'**une cavité est formée par les deux pièces, le côté opposé à la tête de soudage étant orienté vers la cavité.

14. Procédé selon l'une quelconque des revendications précédentes, **caractérisé en ce que** le procédé est utilisé pour la réalisation de bagues de distribution, sachant qu'il est prévu d'utiliser pour l'une des pièces une bague avec une rainure périphérique, de préférence une rainure périphérique en forme de U, et d'utiliser une bande pour la deuxième pièce, les pièces formant conjointement une cavité entourant la bague, en particulier un canal de distribution.

15. Corps assemblé par au moins deux pièces, en particulier corps creux, réalisé de préférence selon le procédé selon l'une des revendications 1 à 14, comportant une première pièce, réalisée de préférence sous forme de corps de base (2, 20), et une deuxième pièce, réalisée de préférence sous forme de couvercle (4, 21), les deux pièces étant réalisées de préférence dans un matériau métallique,
la deuxième pièce (4, 21) et la première pièce (2, 20) étant adjacentes, formant de préférence une cavité (3, 17a, b, c, d) et étant assemblées l'une à l'autre par au moins un ensemble de cordons de soudure par laser,
l'ensemble de cordons de soudure par laser s'étendant en continu depuis un premier côté, de préférence le côté extérieur du corps assemblé, de préférence un corps creux, jusqu'à un deuxième côté du corps assemblé, de préférence jusqu'à la cavité (3, 17a, b, c, d) du corps creux,
l'ensemble de cordons de soudure par laser étant formé par un cordon de soudure (12) obtenu par conduction de chaleur et par un cordon de soudure par faisceau laser ou par faisceau d'électrons, réalisé sous forme de cordon de soudure profond (14),
**caractérisé en ce que**
le cordon de soudure (12) par conduction de chaleur est réalisé sur le deuxième côté, de préférence en étant adjacent à la cavité (3, 17a, b, c, d), et le cordon de soudure profond (14) est délimité vers le deuxième côté, de préférence vers la cavité (3, 17a, b, c, d), par le cordon de soudure (12) par conduction de chaleur.

16. Corps assemblé selon la revendication 15, **caractérisé en ce que** le cordon de soudure par faisceau laser ou par faisceau d'électrons, qui est réalisé de préférence sous forme de cordon de soudure profond (14), est formé par un capillaire de vapeur (15) solidifié, qui pénètre dans le cordon de soudure (12) par conduction de chaleur, toutefois ne traverse pas celui-ci de manière débouchante jusque sur le côté du cordon de soudure opposé à la tête de soudage.

17. Corps assemblé selon la revendication 15 ou 16 **caractérisé en ce que** le cordon de soudure par faisceau laser ou par faisceau d'électrons, qui est réalisé de préférence sous forme de cordon de soudure profond (14), a une section qui s'élargit vers le premier côté du corps assemblé, de préférence vers le côté extérieur du corps creux, et/ou **en ce que** l'ouverture d'introduction du capillaire de vapeur du cordon de soudure profond (14) est disposée sur le premier côté du corps assemblé, de préférence sur le côté extérieur du corps creux.

18. Corps assemblé selon l'une quelconque des revendications 15 à 17, **caractérisé en ce que** l'axe de la dimension en profondeur, de préférence l'axe médian longitudinal, du cordon de soudure par faisceau laser ou par faisceau d'électrons, qui est réalisé de préférence sous forme de cordon de soudure profond, est incliné par rapport à la surface du premier côté, de préférence du côté extérieur du corps assemblé, de préférence du corps creux.

19. Corps assemblé selon l'une quelconque des revendications 15 à 18, **caractérisé en ce que** la partie du cordon de soudure (12) par conduction de chaleur, adjacente au deuxième côté, de préférence à la cavité (3, 17a, b, c, d), comporte une surface (13) concave.

20. Corps assemblé selon l'une quelconque des revendications 15 à 19, **caractérisé en ce que** le corps assemblé est réalisé sous la forme d'une bague de distribution (16) avec au moins une cavité périphérique réalisée dans la bague de distribution, en particulier au moins un canal de distribution (17a, b, c, d), et de préférence il est prévu que le premier corps, de préférence le corps de base, est réalisé sous la forme d'une bague avec au moins une rainure périphérique, en particulier au moins une rainure périphérique, de préférence rectangulaire, et/ou le deuxième corps, de préférence le couvercle, est réalisé sous forme de bande (18a, b, c, d).
